# EUROPEAN PATENT APPLICATION

(11) **EP 4 254 092 A1**
(43) Date of publication of application: **04.10.2023**
(21) Application number: 23155992.3
(22) Date of filing: 10.02.2023
(51) Int. Cl.: G05B 19/042, G05B 23/02

(54) **INFORMATION PROCESSING APPARATUS, INFORMATION OUTPUT METHOD, AND INFORMATION OUTPUT PROGRAM**

(30) Priority: 30.03.2022 JP 2022057073
(71) Applicant: Yokogawa Electric Corporation, Musashino-shi, Tokyo 180-8750 (JP)
(72) Inventor: Yoshimura, Eirou, Tokyo, 180-8750 (JP); Kuriyama, Kan-e, Tokyo, 180-8750 (JP); Hirooka, Isao, Tokyo, 180-8750 (JP)
(74) Representative: Hoffmann Eitle

(57) **Abstract**

A CI server 10 detects an event occurring in a device used for a plant operation, searches topology data for a device having a relationship with a device in which the event has been detected, and outputs a device obtained as a search result. The topology data includes a connection form between devices having a specific relationship.

## Description

### BACKGROUND OF THE INVENTION

### 1. Field of the Invention

The present invention relates to an information processing apparatus, an information output method, and an information output program.

### 2. Description of the Related Art

In various plants using oil, petrochemical, chemical, gas, and the like, various measures are taken to perform safe operation. For example, a monitoring technique for monitoring various devices such as facilities, apparatuses, and sensors for plant operation, a simulation technique for calculating control values to control the plant operation using actual measurement values of various devices, and a simulation technique for predicting a state of a plant are known.
Patent document 1: Japanese Laid-open Patent Publication No. 2021-39411
Patent document 2: Japanese Laid-open Patent Publication No. 2020-201764
Patent document 3: Japanese Laid-open Patent Publication No. 2019-523512
Patent document 4: Japanese Laid-open Patent Publication No. 2020-013622

However, there is room for improvement in that it is difficult to predict an affected range of giving an impact on other devices when an event such as a failure or a setting change occurs in one device in a plant.

It is therefore an object of the present invention to support prediction of the affected range of an event that occurs in a plant.

### SUMMARY OF THE INVENTION

According to one aspect of embodiments, an information processing apparatus includes: a detection unit configured to detect an event occurring in a device used for an operation of a plant; a search unit configured to search topology data for a device having a specific relationship with a device in which the event has been detected, the topology data including a connection form between devices having the specific relationship; and an output unit configured to output a device obtained as a search result.

According to one aspect of embodiments, an information output method includes: detecting an event occurring in a device used for an operation of a plant; searching topology data for a device having a specific relationship with a device in which the event has been detected, the topology data including a connection form between devices having the specific relationship; and outputting a device obtained as a search result.

According to one aspect of embodiments, an information output program causes a computer to execute: detecting an event occurring in a device used for an operation of a plant; searching topology data for a device having a specific relationship with a device in which the event has been detected, the topology data including a connection form between devices having the specific relationship; and outputting a device obtained as a search result.

### BRIEF DESCRIPTION OF THE DRAWINGS

FIG. 1 is a diagram illustrating an overall configuration example of an integrated management system;
FIG. 2 is a functional block diagram illustrating a functional configuration of a CI server;
FIG. 3 is a flowchart illustrating a procedure of an information output process;
FIG. 4 is an example of a control system diagram;
FIG. 5 is an example of a control system diagram;
FIG. 6 is an example of a control system diagram;
FIG. 7 is a schematic diagram illustrating an input example of process data; and
FIG. 8 is a diagram illustrating a hardware configuration example.

### DETAILED DESCRIPTION OF THE PREFERRED EMBODIMENTS

Hereinafter, embodiments of an information processing apparatus, an information output method, and an information output program according to the present application will be described with reference to the accompanying drawings. In each embodiment, only one example or an aspect is described, and a numerical value, a function range, a use scene, and the like are not limited by the example. Each embodiment can be appropriately combined within a range in which the processes do not contradict each other.

### Overall configuration

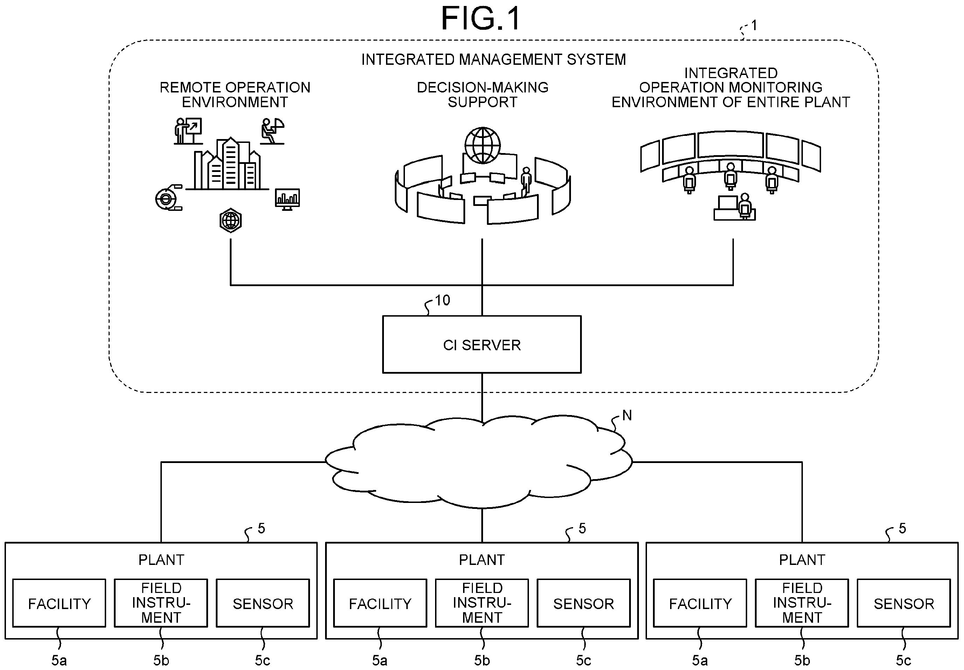

FIG. 1 is a diagram illustrating an overall configuration example of an integrated management system 1. As illustrated in FIG. 1, the integrated management system 1 includes a collaborative information (CI) server 10, and is connected to each of a plurality of plants 5 via a network N. Note that the network N can adopt various communication networks such as a dedicated line, the Internet, and a long term evolution (LTE) network.

The integrated management system 1 is a system that integrally manages the plurality of plants 5, and can be realized by a physical server or a virtual machine or the like using a cloud system.

The CI server 10 is an example of an information processing apparatus that is connected to various devices and systems in the plant 5 and integrally manages the various devices and systems. Specifically, the CI server 10 provides a remote operation environment, a decision-making support environment, and an integrated operation monitoring environment of the entire plant. These environments can be provided, as an example, via a client terminal (not illustrated) functioning as a human machine interface (HMI) with the CI server 10.

For example, the remote operation environment provides a monitoring system that manages a state of each of the plurality of plants 5, and provides services such as alarming and notification to an operator. The decision-making support environment simulates a state of the plant 5 and a control value in the plant 5 for each of the plurality of plants 5, and provides services such as operation control of the plant 5 and the notification to the operator based on a simulation result. The integrated operation monitoring environment integrally monitors the plurality of plants 5, and provides services such as product management, supply control, and cost management across the plurality of plants 5. In this manner, the CI server 10 can also execute warning notification and transmission of various types of information to a designated user, optimization of information management in the entire production activity, and support of safe and effective operation.

Each plant 5 is an example of various plants using oil, petrochemical, chemical, or gas, and includes a factory or the like having various facilities for obtaining products. Examples of products are liquefied natural gas (LNG), resins (plastic, nylon, etc.), and chemical products. Examples of the facilities include a factory facility, a machine facility, a production facility, a power generation facility, a storage facility, and a facility at a well source where oil, natural gas, and the like are mined.

The plant 5 is constructed using a distributed control system (DCS) (not illustrated) or the like, and operations of a facility 5a, a field instrument 5b, a sensor 5c, and the like are controlled. The facility 5a, the field instrument 5b, and the sensor 5c can correspond to the examples of devices of the plant 5. For example, a control system in the plant 5 executes various controls, using process data used in the plant 5, with respect to control devices such as the field instrument 5b installed in a facility to be controlled and an operation device corresponding to the facility to be controlled.

The facility 5a includes, for example, an alarm such as a speaker that generates an alarm and a conveyance path used for conveyance of a product produced in the plant 5. The field instrument 5b includes a valve, a pump, a fan, and the like driven by a motor, an actuator, and the like. The sensor 5c includes a device that acquires, detects, or measures a physical quantity, such as a pressure sensor, a temperature sensor, a flow rate sensor, a pH sensor, a speed sensor, and an acceleration sensor.

The data generated in the plant 5 and collected by the CI server 10 includes control data such as a process value PV, a set value SV, and a manipulated value MV. The process value PV is data indicating a state of a process in the plant 5. The process value PV is obtained, for example, by the corresponding field instrument 5b. Examples of the process value PV are a pressure, a temperature, a flow rate, a pH value, a speed, and acceleration.

The set value SV is data (target value) indicating a target of the process value PV in the plant 5. The set value SV is provided to, for example, simulation for executing the operation control of the plant 5, and is used for the control of the plant 5. Examples of the set value SV are, similarly to the process value PV, the pressure, the temperature, the flow rate, pH, the speed, and the acceleration. The manipulated value MV is data indicating the operation in the plant 5. The manipulated value MV is acquired from, for example, the corresponding field instrument 5b or provided to the field instrument 5b after the simulation is executed. The field instrument 5b operates according to the manipulated value MV given. Examples of the manipulated value MV are a valve operation amount (e.g., valve opening degree), a pump operation amount, and a fan operation amount.

Under the above system configuration, the CI server 10 acquires data regarding the operation of the plant 5, to which attribute information indicating a state of the device is added, from various devices such as the facility 5a, the field instrument 5b, and the sensor 5c used for the operation of the plant 5. Then, the CI server 10 classifies the data according to the attribute information of the acquired data so that the CI server can execute the operation of the plant 5 using the data classified by the attribute information.

### Functional configuration

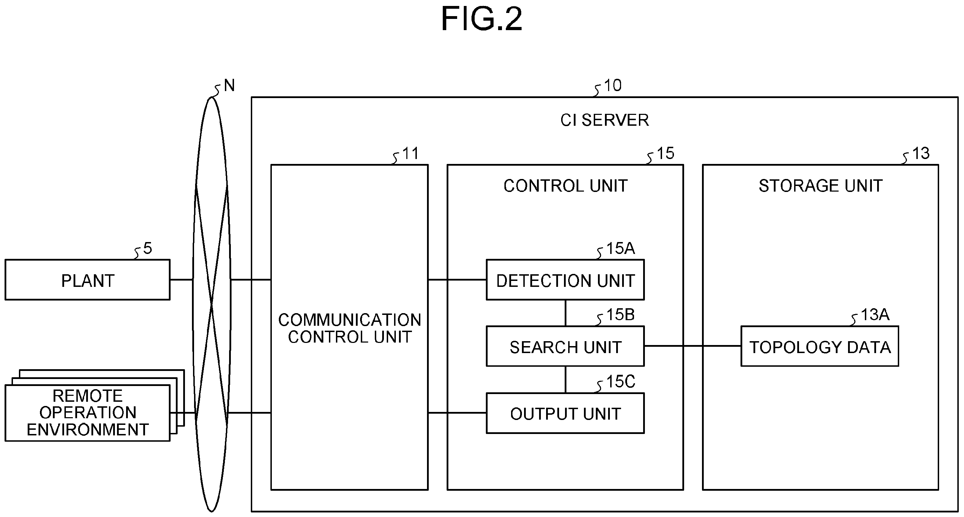

FIG. 2 is a functional block diagram illustrating a functional configuration of the CI server 10. Note that, here, an example in which the CI server 10 provides the remote operation environment, a decision-making support service, and the integrated operation monitoring environment of the entire plant will be described, but each service may be executed by a separate apparatus.

A communication control unit 11 is a functional unit that controls communication with other apparatuses such as various devices in the plant 5 and a client terminal that functions as the HMI. As an example, the communication control unit 11 can be realized by a network interface card such as a LAN card. As one aspect, the communication control unit 11 receives various kinds of upload data from devices of the plant 5, and receives a setting change related to the devices of the plant 5 from the client terminal. As another aspect, the communication control unit 11 outputs the affected range of an event occurring in the plant 5.

A storage unit 13 is a functional unit that stores various types of data. As an example, the storage unit 13 is realized by an internal, external, or auxiliary storage of the CI server 10. For example, the storage unit 13 stores topology data 13A. In addition to the topology data 13A, other data may be stored in the storage unit 13.

The topology data 13A is data in which a connection form between devices of the plant 5 having a specific relationship, such as a control loop, a continuous flow, or an electrical connection, is defined. Examples of the relationship are a control connection relationship, a physical connection relationship, and an electrical connection relationship.

The control connection relationship may be the control loop that is a control unit of process, and includes, for example, a device relationship such as measurement, control computation, and measurement. For example, the control loop can be extracted by importing design data including a piping and instrumentation diagram (P & ID), such as computer-aided design (CAD) data, to a plant data conversion software. The P & ID may include, as an example, a control flow, a control block, and information on devices of the plant 5. Note that the control connection relationship can be extracted not only from the P & ID but also from a system diagram in a building or a power generation facility, a single-phase/three-phase connection diagram of a power distribution system, or the like.

The physical connection relationship may include a positional relationship between devices arranged as a continuous process configuring the plant 5. For example, the positional relationship of the devices of the plant 5 can be extracted by importing the design data of the plant 5, such as 3D CAD data, into the plant data conversion software.

The electrical connection relationship may include a connection relationship between facilities and devices belonging to the power generation facility or the power distribution system. For example, the electrical connection relationship can be extracted by importing the design data such as a system diagram of the building or the power generation facility or a single-phase/three-phase connection diagram of the power distribution system into the plant data conversion software.

Graph data having a graph structure expressing a connection relationship of each of the control connection relationship, the physical connection relationship, and the electrical connection relationship is stored in the storage unit 13 as the topology data 13A. For example, the topology data 13A can also have a graph structure of a directed graph in which directions are defined at edges included in the topology data 13A according to types such as control, physical, and electrical connection relationships. For example, by taking the control loop as an example, it is possible to set a direction from the device corresponding to a detection end, such as the sensor 5c, to a device corresponding to an operation end such as the facility 5a or the field instrument 5b. Further, by taking the continuous process as an example, it is possible to set the direction from the upstream device to the downstream device.

The connection relationship of the control connection relationship and the electrical connection relationship can be associated with the physical connection relationship by using a verification function between the data included in the plant data conversion software described above. As a result, physical plant information (facility, device, piping, and their connections) is associated with logical information (e.g., name, identification information, model name, parameter name held, and data) of the control and facility.

In addition, the facility 5a, the field instrument 5b, and the like with respect to a node included in the topology data 13A can be associated, as a label, with performance information and the like extracted from an outline view of the facility 5a, the field instrument 5b, and the like.

Note that, here, an example of using the plant data modification software has been described as an example of the method of generating the topology data 13A, but the plant data modification software may not necessarily be used.

For example, a device tag used as identification information of the device is added to the process data uploaded from the device of the plant 5. Some of the device tags are generated according to certain naming rules. The control connection relationship and the physical connection relationship can be extracted based on the naming rule.

As an example, in the case of a duplexed device or a parallel system device, a tag such as "FI001A" or "FI001B" may be set. In this case, "FI001A" can be extracted as an A-system device, and "FI001B" can be extracted as a B-system device.

As another example, in the case of domestic power thermal power generation and nuclear power generation plants, tags such as "1C0022", "1F0010", and "1G0003" may be set. In this case, since "C" in the first "1C0022" is an acronym of "condensing", a device with this tag can be extracted as a device of a condensate system. Since "F" in the second "1F0010" is an acronym of "fuel", a device with this tag can be extracted as a device of a fuel system. Since "G" in the third "1G0003" is an acronym of "generator", a device with this tag can be extracted as a device of a power generator system.

A control unit 15 is a functional unit that performs overall control of the CI server 10. For example, the control unit 15 can be realized by a hardware processor. As illustrated in FIG. 2, the control unit 15 includes a detection unit 15A, a search unit 15B, and an output unit 15C. Note that the control unit 15 may be realized by hard-wired logic or the like.

The detection unit 15A is a processing unit that detects an event occurring in a device used for the operation of the plant 5. As an example, the detection unit 15A detects a failure, a setting change, or the like as the event described above.

As one aspect, the detection unit 15A can detect the failure based on a process value uploaded from the device of the plant 5 such as the sensor 5c. For example, the detection unit 15A can detect the failure based on whether the process value is an abnormal value or whether the process value is within an appropriate range. In this way, the device in which the failure is detected is identified as an event-detected device. In addition, the detection unit 15A refers to the attribute information such as a status label given at the time of uploading the process data from the device of the plant 5. At this point, when the status label is "abnormal", the detection unit 15A can detect a device to which the status label of "abnormal" is assigned as the event-detected device.

As another aspect, the detection unit 15A receives a request for changing the set value SV of the device of the plant 5 such as the sensor 5c corresponding to the detection end from the client terminal functioning as the HMI function with the CI server 10. A device whose setting change request has been received can be detected as the event-detected device.

The search unit 15B is a processing unit that searches for a device, from the topology data 13A stored in the storage unit 13, having a specific relationship with the event-detected device in which the event has been detected by the detection unit 15A.

As one aspect, the search unit 15B searches a related device having the connection relationship of the control loop with the event-detected device. Then, the search unit 15B extracts a related device that is found in the search. The related device extracted in this manner may be referred to as an "extracted device". Furthermore, the search unit 15B further searches for a related device having a relationship of the control loop with the extracted device, and extracts a related device hit by the search. This search is repeated until the related device is no longer found. Here, in addition to the search for the connection relationship of the control loop, the search unit 15B refers to the physical connection relationship in the topology data 13A, searches for a device connected downstream of the extracted device in the continuous process of the plant 5 as a related device, and can also extract a related device hit by the search.

As another aspect, the search unit 15B can change the search range to search for a related device associated with the event-detected device, based on the event-detected device, according to designation of the following search modes.

Examples of the search modes are a "backup device switching mode" for predicting an affected range associated with switching to a backup device, an "interlock progress prediction mode" for predicting an affected range associated with progress of an interlock, and a "construction area prediction mode" for predicting a construction area.

In the case of the "backup device switching mode", the search unit 15B searches for a related device positioned in parallel with the event-detected device in the continuous process of the plant 5 with reference to the physical connection relationship in the topology data 13A.

In the case of the "interlock progress prediction mode", the search unit 15B searches for a related device adjacent to a downstream side of the event-detected device in the continuous process of the plant 5 with reference to the physical connection relationship in the topology data 13A. As a result, the event-detected device and the backup device parallelized therewith can be extracted.

The "construction area prediction mode" includes two prediction modes of a "pipe isolating operation" for predicting a range in which a pipe isolating operation is performed at the time of construction such as restoration, and a "circuit breaker opening/closing operation range" for predicting a range affected by the opening/closing operation of the circuit breaker at the time of construction such as restoration.

For example, in the case of the prediction mode of the "pipe isolation operation range", the search unit 15B searches for a related device located upstream and downstream of the event-detected device in the continuous process of the plant 5 with reference to the physical connection relationship in the topology data 13A. Here, the search unit 15B can set the search range to terminate the search for related devices, starting from the event-detected device, to a range in which the pipe isolation operation is performed, for example, an upstream branch source and a downstream merging destination.

In addition, in the case of the prediction mode of the "circuit breaker switching operation range", the search unit 15B refers to the electrical connection relationship in the topology data 13A and searches for a related device having the electrical connection relationship with the event-detected device in the plant 5. Here, the search unit 15B can set the search range to terminate the search for related devices, starting from the event-detected device, to a range in which the power is shut off by the circuit breaker same as the event-detected device.

The output unit 15C is a processing unit that outputs the extracted device obtained as the search result by the search unit 15B. An output destination to which the search result is output in this manner may be any destination. As an example, the destination is a client terminal that functions as the HMI with the CI server 10 and a program or a service that executes information processing using the search result as an input.

As one embodiment, the output unit 15C can cause the client terminal to display the extracted device obtained as the search result by the search unit 15B as the affected range. As an example, the output unit 15C distinguishes and displays a display form of the node corresponding to the event-detected device, the node corresponding to the affected range, and other nodes on the graph data of the control connection relationship and the physical connection relationship. Here, the direction can be displayed on an edge of the graph data according to the graph structure of the directed graph to which the direction from the detection end to the operation end, the direction from the arithmetic device to the operation end, a flow direction corresponding to the continuous process, and the like are given. Furthermore, the output unit 15C is not limited to the graph data described above, and can map and display the affected range on a pipe instrumentation diagram, a control system diagram, and various types of drawing data such as a control flow and a control block.

### Flow of process

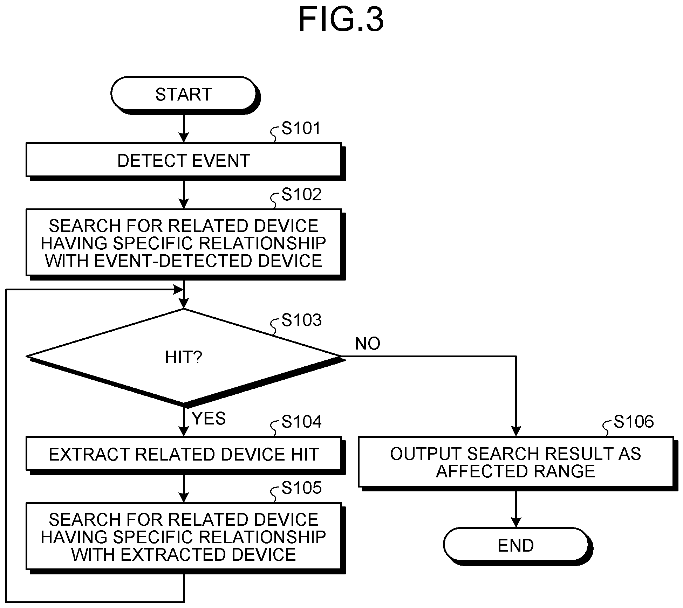

FIG. 3 is a flowchart illustrating a procedure of information output process. As illustrated in FIG. 3, when an event is detected by the detection unit 15A (Step S101), the search unit 15B searches for a related device having the connection relationship of the control loop with the event-detected device detected in Step S101 (Step S 102).

Then, when there is a hit in the search (Step S103 Yes), the search unit 15B extracts the related device that has been hit in the search (Step S104). Furthermore, the search unit 15B further searches for a related device having the control loop relationship with the extracted device in Step S 104 (Step S 105). At this point, when there is a hit in the search (Step S 103 Yes), the search unit 15B extracts the related device that has been hit in the search (Step S104).

The processes in Steps S104 and S105 are repeated until the search does not hit any more (Step S103 No). Then, when there is no hit in the search (Step S103 No), the output unit 15C outputs the extracted device that is extracted as the search result in Step S104 as the affected range (Step S 106), and ends the process.

### Specific example (1)

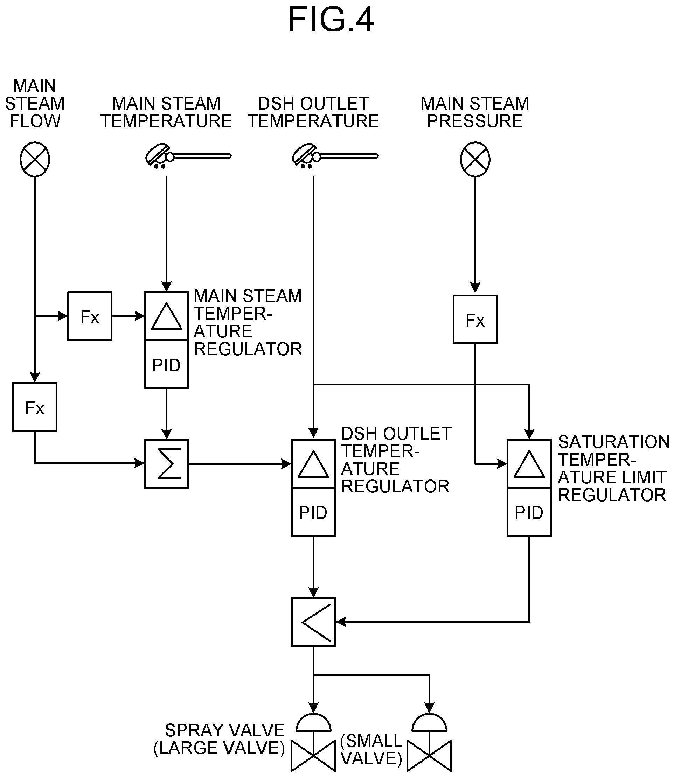

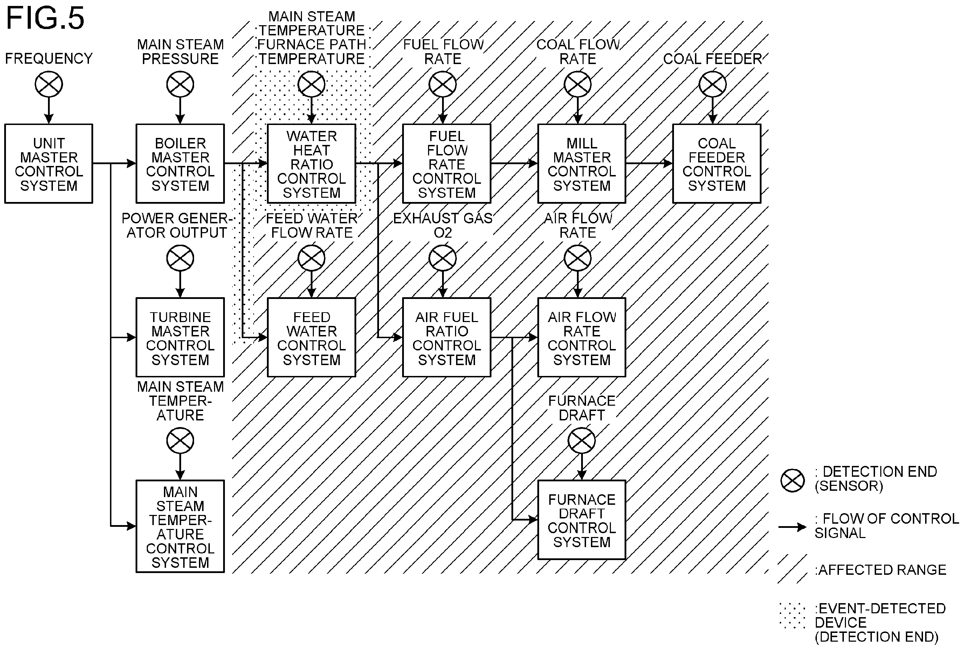

Next, a specific example regarding a display of the affected range will be described. FIGS. 4 and 5 are diagrams illustrating examples of a control system diagram. FIG. 4 illustrates a steam temperature control system of a power generating boiler as an example. FIG. 5 illustrates a mutual interference system of the power generating boiler.

For example, FIG. 4 gives an example in which an event such as a failure or a change of the set value SV occurs in a thermometer that measures a main steam temperature in the steam temperature control system of the power generating boiler. In this case, since the detection end corresponding to the thermometer is a mutual interference system in which a large number of operation ends (= control valves) and process values affect each other, the influence of the detection end does not stay inside the steam temperature control system but also affects other control systems.

In a display example of the mutual interference system of the power generating boiler illustrated in FIG. 5, the control system of the detection end corresponding to the event-detected device is indicated by dot hatching, and the affected range is indicated by line hatching. According to the display example illustrated in FIG. 5, it is possible to clearly indicate that the detection end of the main steam temperature is the cause, and thus, it is possible to identify a point of the cause of the influence. Furthermore, it can be clearly indicated that a failure of the thermometer, a change of the set value S, or the like affects the control systems of a feed water flow rate, a fuel flow rate, a coal flow rate, a coal feed rate, an exhaust gas O2, an air flow rate, and a furnace draft.

### Specific example (2)

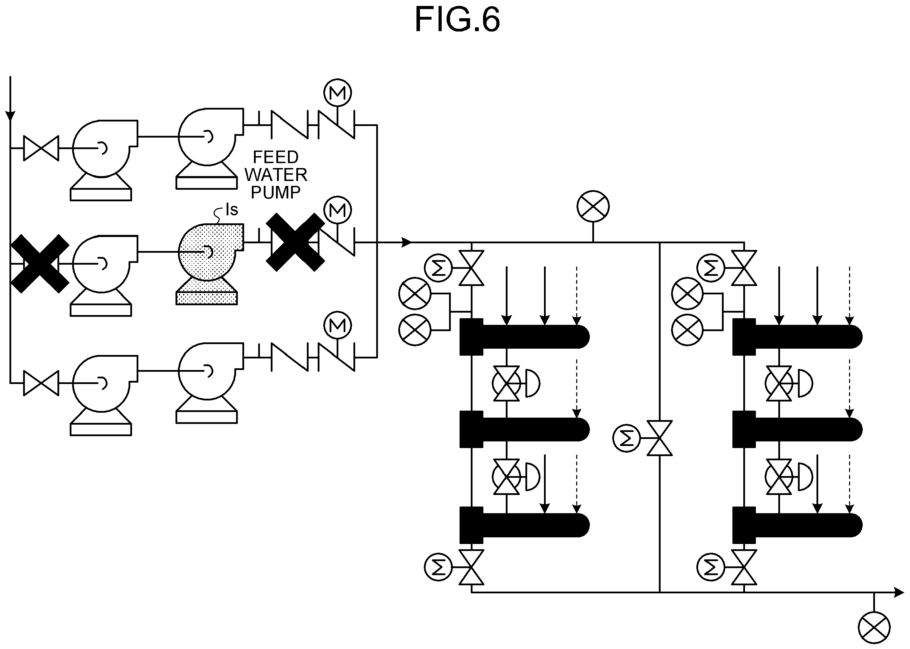

FIG. 6 illustrates an example of a control system diagram. FIG. 6 illustrates an example in which a search for a prediction mode of a "pipe isolation operation range" is applied to a control system of a high temperature feed water heater. Further, FIG. 6 illustrates an example in which a failure occurs in a feed water pump Is under the operation in which two systems of the three series of feed water pumps are always operated and the remaining one system stands by as a backup. The backup machine is automatically activated under a situation where one system trips in order to maintain the two-system operation.

In this case, as illustrated in FIG. 6, a cross mark is displayed as the affected range on a manual valve positioned near an upstream branch source of the feed water pump Is corresponding to the event-detected device and a manual valve positioned near a downstream merging destination. With this display, a range between the two cross marks, i.e., the two feed water pumps can be clearly indicated as a prediction result of the range in which the isolation operation is performed at the time of restoration work. As a result, an operator or the like who monitors the plant 5 can grasp the affected range before the trip in which the restoration work is performed, and thus, it is possible to prepare measures in advance.

### Effects

As described above, the CI server 10 according to the present embodiment detects an event occurring in a device used for the plant operation, searches for a device having a relationship with the event-detected device from the topology data regarding a connection form between devices having a specific relationship, and outputs a device obtained as a search result. Therefore, according to the CI server 10 of the present embodiment, it is possible to support the prediction of the affected range of the event occurring in the plant.

### Other embodiments

Although the embodiments of the present invention have been described so far, the present invention can be applied in various ways, and may be implemented in various different forms other than the above-described embodiments.

### Online simulation

As an example, the CI server 10 applies, to the model of the simulator, the control connection relationship and the physical connection relationship after the affected range is identified, and inputs the process data uploaded from the plant 5 to the simulator. As a result, the control parameters of the plant 5 can be optimally tuned.

An example of the above simulator is a real time optimizer (RTO), which is one of online simulators that optimizes the plant operation in real time. As an example, the RTO executes simulation of a behavior of the plant for each of a plurality of cases having different operating conditions based on time-series data of a process value of first information, so-called process data. As a result of the simulation, a predicted value of the process data simulated for each case is obtained as a control variable CV, and a profit is output, as an example of a target function value, by inputting the control variable CV to the target function. As described above, the RTO calculates a ratio between the variations of the control variable CV and variations of the profit, i.e., the gain, by case study in which the simulation is executed for each case. The RTO then uses the calculated gain to calculate a CV target at which the profit is optimal, e.g., maximum. From the CV target calculated, a manipulated variable MV corresponding to the input variable to the process or the set value SV of the control system of the plant 5, for example, the DCS is calculated.

Here, the RTO executes the simulation on the assumption that the RTO is in a settling state in which the operating condition of the process is not being changed. Therefore, the output unit 15C inputs the data acquired from the devices included in the plant 5, excluding the data acquired from the device in which the failure is detected and the device corresponding to the affected range, to the online simulator.

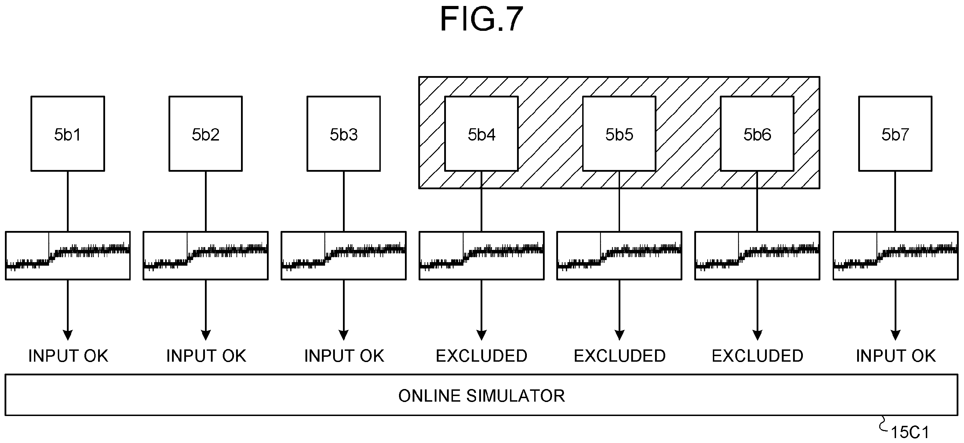

FIG. 7 is a schematic diagram illustrating an input example of process data. In FIG. 7, as an example of the device of the plant 5, seven devices 5b1 to 5b7 are extracted and illustrated, and the devices 5b4 to 5b6 included in the affected range are indicated by line hatching. As illustrated in FIG. 7, when the process data is uploaded from the seven devices 5b1 to 5b7, the output unit 15C inputs the process data acquired from the devices 5b1 to 5b3 and the process data acquired from the device 5b7 to the online simulator 15C1. On the other hand, the output unit 15C excludes the process data acquired from the devices 5b4 to 5b6 included in the affected range from the input to the online simulator 15C1. By this input control of the process data, it is possible to suppress a decrease in the accuracy of the simulation by the online simulator 15C1 and to realize an improvement in the accuracy.

### Numerical value, etc.

The number of plants, facilities, field instruments, and sensors, content of an integration process, or specific examples of the first information, the second information, the first condition, the second condition, and the like described in the above embodiments are merely examples, and can be changed. Also, in the flowchart described in the embodiments, the order of processes can be changed within a range without contradiction.

### System

The process procedure, the control procedure, the specific name, and the information including various data and parameters illustrated in the above document and the drawings can be arbitrarily changed unless otherwise specified. For example, the detection unit 15A, the search unit 15B, and the output unit 15C may be configured by separate apparatuses.

In addition, each component of each apparatus illustrated in the drawings is functionally conceptual, and is not necessarily physically configured as illustrated in the drawings. In other words, specific forms of distribution and integration of the apparatuses are not limited to those illustrated in the drawings. Specifically, all or a part thereof can be functionally or physically distributed and integrated in an arbitrary unit according to various loads, usage conditions, and the like.

Furthermore, all or an arbitrary part of each processing function performed in each apparatus can be realized by a central processing unit (CPU) and a program analyzed and executed by the CPU, or can be realized as hardware by wired logic.

### Hardware

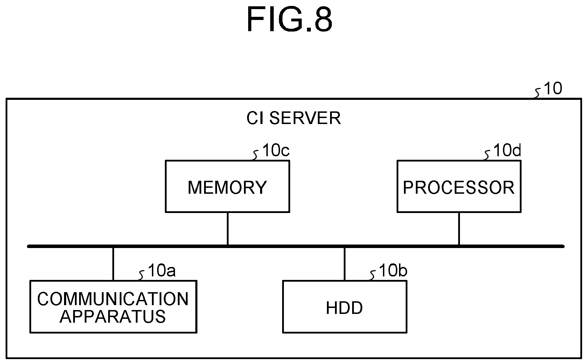

Next, a hardware configuration example of the computer described in the embodiment will be described. FIG. 8 is a diagram illustrating a hardware configuration example. As illustrated in FIG. 8, the CI server 10 includes a communication apparatus 10a, a hard disk drive (HDD) 10b, a memory 10c, and a processor 10d. The parts illustrated in FIG. 8 are connected to each other by a bus or the like.

The communication apparatus 10a is a network interface card or the like, and communicates with another server. The HDD 10b stores a program for operating the functions illustrated in FIG. 2, a DB, and the like.

The processor 10d reads a program for executing a process similar to the processing unit illustrated in FIG. 2 from the HDD 100b or the like and develops the program in the memory 100c, thereby operating the process for executing the functions described with reference to FIG. 2 and the like. For example, this process executes a function similar to that of the processing unit included in the CI server 10. Specifically, the processor 10d reads a program having functions similar to those of the detection unit 15A, the search unit 15B, the output unit 15C, and the like from the HDD 10b or the like. Then, the processor 10d executes a process of executing processes similar to those of the detection unit 15A, the search unit 15B, the output unit 15C, and the like.

As described above, the CI server 10 operates as an information processing apparatus that executes a plant control method by reading and executing the program. In addition, the CI server 10 can also realize the same functions as those of the above-described embodiment by reading the program from the recording medium by a medium reading apparatus and executing the program read. Note that the program referred to in these other embodiments is not limited to being executed by the CI server 10. For example, the present invention can be similarly applied to a case where another computer or server executes a program or a case where the computer and the server execute a program in cooperation.

The program can be distributed via a network such as the Internet. In addition, this program is recorded on a computer-readable recording medium such as a hard disk, a flexible disk (FD), a CD-ROM, a magneto-optical disk (MO), or a digital versatile disc (DVD), and can be executed by being read from the recording medium by the computer.

Prediction of the affected range of the event that occurs in the plant can be supported according to an embodiment.

## Claims

1. An information processing apparatus (10) comprising:
a detection unit (15A) configured to detect an event occurring in a device used for an operation of a plant;
a search unit (15B) configured to search topology data for a device having a specific relationship with a device in which the event has been detected, the topology data including a connection form between devices having the specific relationship; and
an output unit (15C) configured to output a device obtained as a search result.

2. The information processing apparatus according to claim 1, wherein
the search unit (15B) searches for a device having a control loop relationship with the device in which the event has been detected.

3. The information processing apparatus according to claim 1 or 2, wherein
the search unit (15B) searches for a device located in parallel with or a device located adjacent to a downstream side of the device in which the event has been detected in a continuous process of the plant.

4. The information processing apparatus according to claim 1 or 2, wherein
the search unit (15B) searches for a device connected to upstream and downstream of the device in which the event has been detected in a continuous process of the plant.

5. The information processing apparatus according to any one of claims 1 to 4, wherein
the detection unit (15A) detects a failure of a device of the plant.

6. The information processing apparatus according to claim 5, wherein
the output unit (15C) inputs data obtained from a device included in the plant to a simulator in order to calculate control data regarding the operation of the plant, the data excluding a device in which the failure has been detected and the device obtained as the search result.

7. The information processing apparatus according to any one of claims 1 to 4, wherein
the detection unit (15A) detects a setting change of the device of the plant.

8. An information output method comprising:
Detecting (S101) an event occurring in a device used for an operation of a plant;
searching (S 102, S 105) topology data for a device having a specific relationship with a device in which the event has been detected, the topology data including a connection form between devices having the specific relationship; and
outputting (S 106) a device obtained as a search result.

9. An information output program causing a computer to execute:
detecting (S101) an event occurring in a device used for an operation of a plant;
searching (S 102, S 105) topology data for a device having a specific relationship with a device in which the event has been detected, the topology data including a connection form between devices having the specific relationship; and
outputting (S 106) a device obtained as a search result.
